# EUROPÄISCHE PATENTSCHRIFT

(11) **EP 3 790 722 B1**
(45) Veröffentlichungstag und Bekanntmachung des Hinweises auf die Patenterteilung: **06.09.2023**
(21) Anmeldenummer: 19720083.5
(22) Anmeldetag: 17.04.2019
(51) Int. Cl.: B29C 45/52, B29C 45/60

(54) **RÜCKSTRÖMSPERRE FÜR DIE SCHNECKE EINER PLASTIFZIEREINHEIT EINER SPRITZGIESSMASCHINE**
NON-RETURN VALVE FOR THE SCREW OF AN PLASTICISING UNIT OF AN INJECTION MOULDING MACHINE
CLAPET DE NON-RETOUR OUR UN VIS D'UNE UNITÉ DE PLASTIFICATION D'UNE MACHINE DE MOULAGE PAR INJECTION

(30) Priorität: 08.05.2018 DE 102018111055
(43) Veröffentlichungstag der Anmeldung: 17.03.2021
(73) Patentinhaber: KraussMaffei Technologies GmbH, 80997 München (DE)
(72) Erfinder: HEYER, Norbert, 80997 München (DE); HUNGERKAMP, Thomas, 81245 München (DE)
(74) Vertreter: Wilhelm, Ludwig
(86) Internationale Anmeldenummer: PCT/EP2019/059966
(87) Internationale Veröffentlichungsnummer: WO 2019/214919

(56) Entgegenhaltungen:
- DE-A1- 1 554 762
- DE-B- 1 124 672
- DE-B- 1 260 765
- DE-B- 1 266 486
- DE-U1- 29 503 275
- GB-A- 1 066 206
- JP-U- H0 560 824
- US-A- 3 689 184
- US-A1- 2007 269 550

## Beschreibung

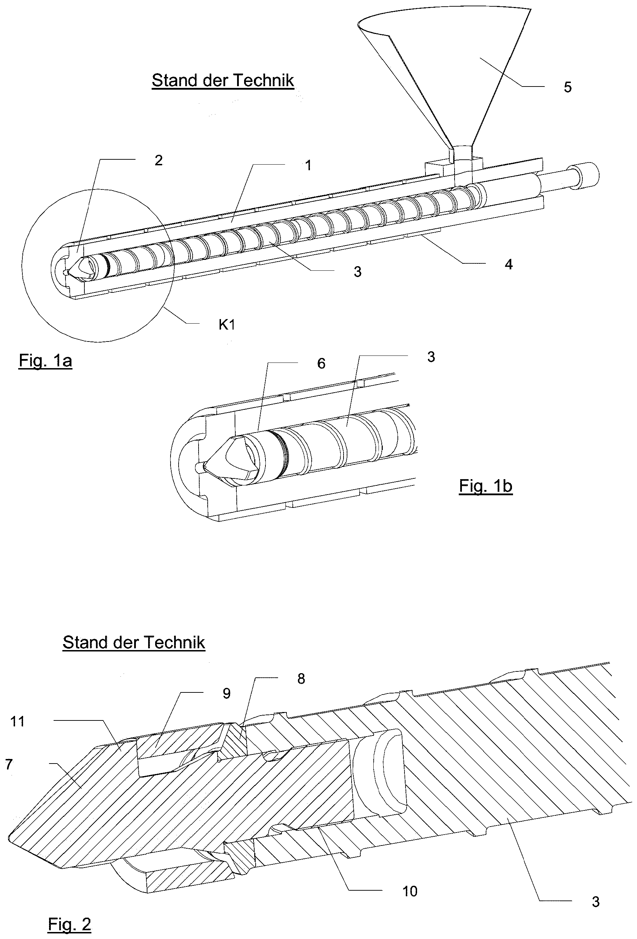

Beim Spritzgießen von thermoplastischen Kunststoffen werden Schnecken eingesetzt, die in Schneckenzylindern axial verschiebbar und in definierter Richtung drehbar sind. Beim Plastifiziervorgang rotiert die Schnecke und wird durch den in den Schneckenvorraum geförderten Kunststoff nach hinten verschoben. Durch die hierbei im Kunststoff auftretende Reibung und durch zusätzlich außen auf dem Schneckenzylinder angebrachte Heizbänder wird das Kunststoffgranulat aufgeschmolzen. Zum Einspritzen der schmelzflüssigen Kunststoffmasse in die Kavität eines Formwerkzeugs wird die Schnecke als Kolben eingesetzt und hierzu axial im Schneckenzylinder bewegt. Um zu verhindern, dass bei diesem Einspritzvorgang, also bei Vorwärtsbewegung der nicht rotierenden Schnecke, aufgeschmolzener Kunststoff zurückfließt, werden Rückströmsperren eingesetzt. Während des Plastifiziervorganges wirkt ein Drehmoment, während des Einspritzvorganges eine Axialkraft auf die Schnecke. Die Figur 1a zeigt eine solche bekannte Plastifiziereinheit. Sie umfasst im Wesentlichen einen Schneckenzylinder 1 mit einem Zylinderkopf 2, eine Schnecke 3, Heizbänder 4 und einen Granulattrichter 5. In der Figur 1b ist der im Kreis K1 befindliche Abschnitt der Plastifiziereinheit vergrößert dargestellt und man kann erkennen, dass am vorderen Ende der Schnecke 3 eine Rückströmsperre 6 vorhanden ist.

Die Figur 2 zeigt eine Schnecke mit einer Rückströmsperre gemäß dem Stand der Technik. Üblicherweise kommen dreiteilige Rückströmsperren bestehend aus feststehendem Schneckenkopf 7 und Druckring 8 sowie einem verschiebbaren Sperrring 9 zum Einsatz. Der Schneckenkopf 7 ist üblicherweise mit einem Gewinde 10 mit der Schnecke 3 verbunden. Der Schneckenkopf 7 weist einen oder mehrere Flügel 11 auf. Während des Plastifiziervorgangs liegt der Sperrring 9 an den Flügeln 11 des Schneckenkopfes 7 an, wobei die Schmelze von der Schnecke 3 in den Schneckenvorraum strömen kann. Beim Einspritzvorgang liegt der Sperrring 9 am Druckring 8 an, wodurch ein Zurückströmen der Kunststoffmasse in die Schnecke 3 verhindert wird.

US 2007/269550 A1 offenbart eine Rückstromsperre bei der als Sperrorgan ein Sperrring verwendet wird, welcher in der geöffneten Stellung an einem vorderen Haltering und in der geschlossenen Stellung an einem hinteren Haltering anliegt. In einer Ausführungsform umfasst der vordere Haltering zwei Halbschalen, wobei in jeder der Halbschalen Kanäle für den Durchfluss von Schmelze von der Schnecke in den Schneckenvorraum vorgesehen sind, wobei die Kanäle parallel zur Längsachse der Rückströmsperre bzw. zur Längsachse der Schnecke liegen. Der Sperring kann ebenfalls aus Halbschalen gebildet werden.

DE 12 66 486 B offenbart eine Rückstromsperre mit mehreren Schmelzekanälen, die jeweils ein Kugelventil aufweisen. DE 15 54 762 A1 und US 3 689 184 A offenbaren Rückstromsperren mit einem zentralen Schmelzekanal und mit einem Kugelventil.

Nachteilig an einer solchen bekannten Rückströmsperre ist die Verbindung von Schneckenkopf und Schnecke mit einem Gewinde, weil dies eine Querschnittsschwächung der Schnecke bewirkt. Dies führt zu einer Reduktion der Bauteilfestigkeit und der Lebensdauer.

Ausgehend hiervon liegt der Erfindung die Aufgabe zugrunde, eine Rückströmsperre anzugeben, die die Übertragung höherer Axialkräfte und Drehmomente auf die Schnecke ermöglicht sowie eine Verlängerung der Lebensdauer der Schnecke bewirkt.

Die Lösung dieser Aufgabe erfolgt durch eine Rückströmsperre mit den Merkmalen von Anspruch 1. Vorteilhafte Ausgestaltungen und Weiterentwicklungen finden sich in den abhängigen Ansprüchen.

Dadurch, dass zwei Halbschalen in einem Abschnitt der Schnecke mit reduziertem Schneckendurchmesser angeordnet werden können, können die Schnecke und die Schneckenspitze als ein Bauteil ausgeführt werden. Man vermeidet damit die aus dem Stand der Technik bekannte Querschnittsschwächung der Schnecke. Die Funktion der Rückströmsperre ist in die beiden Halbschalen eingebaut. Hierzu sind in jeder der Halbschalen ein oder mehrere Kanäle für den Durchfluss von Schmelze von der Schnecke in den Schneckenvorraum vorgesehen, wobei die Kanäle im Wesentlichen parallel zur Längsachse der Rückströmsperre bzw. zur Längsachse der Schnecke liegen. In jedem der Kanäle ist eine Kugel und in Fließrichtung der Schmelze gesehen nachfolgend der Kugel ein Stift vorgesehen, wobei der Stift im Wesentlichen quer zu Fließrichtung der Schmelze angeordnet ist. Die Kanäle weisen in Fließrichtung der Schmelze gesehen jeweils einen ersten Kanalabschnitt mit einem Kanaldurchmesser kleiner als der Kugeldurchmesser und einen zweiten Kanalabschnitt mit einem Kanaldurchmesser größer als der Kugeldurchmesser auf, wobei Kugel und Stift in dem zweiten Kanalabschnitt angeordnet sind. Gemäß einem Kerngedanken der vorliegenden Erfindung wird die Funktion einer Rückströmsperre in ein an die Schnecke angebautes Bauteil verlegt, nämlich in zwei Halbschalen, die um die Schnecke herum an die Schnecke angebracht sind.

Der Durchmesser der Schnecke ist hierzu in geeigneter Weise über einen Abschnitt entsprechend der Längserstreckung der beiden Halbschalen reduziert.

Gemäß einer vorteilhaften Ausführungsform kann ein konisch ausgebildeter Übergang von dem ersten Kanalabschnitt auf den zweiten Kanalabschnitt vorgesehen sein, so dass sich ein konischer Dichtsitz für die Kugel ergibt.

Ferner kann der Stift vorzugsweise als Zylinderstift ausgebildet sein und somit einen zylindrischen Querschnitt aufweisen.

Gemäß einer weiteren bevorzugten Ausführungsform können die Halbschalen derart ausgebildet sein, dass der Außendurchmesser der zusammengefügten Halbschalen parallel und senkrecht zur Trennfuge gemessen gleich groß ist, derart, dass sich in zusammengefügtem Zustand eine Trennspaltweite von Null ergibt.

Ein weiterer Kerngedanke der vorliegenden Erfindung betrifft eine mit einer erfindungsgemäßen Rückströmsperre ausgestattete Schnecke einer Plastifiziereinheit. Hierbei weist die Schnecke einen Abschnitt auf, in welchem kein Schneckensteg vorhanden ist und in welchem der Außendurchmesser der Schnecke dem Innendurchmesser der Rückströmsperre entspricht. Die beiden Halbschalen einer erfindungsgemäßen Rückströmsperre sind in besagtem Abschnitt auf der Schnecke angeordnet.

In einer Ausführungsform kann vorgesehen sein, dass die Rückströmsperre in Fließrichtung der Schmelze gesehen am vorderen Ende der Schnecke angeordnet ist. Im Unterschied zum Stand der Technik können die Schneckenspitze und die Schnecke als ein Bauteil bzw. einstückig ausgebildet sein.

Gemäß einer anderen Ausführungsform kann vorgesehen sein, dass die Rückströmsperre vom vorderen Ende der Schnecke beabstandet angeordnet ist, derart dass in Fließrichtung der Schmelze gesehen sowohl vor als auch hinter der Rückströmsperre ein Schneckenabschnitt mit einem Schneckensteg vorliegt.

In vorteilhafter Weise kann eine der beiden Halbschalen oder können auch beide Halbschalen mittels einer Verdrehsicherung auf der Schnecke angeordnet sein. Dabei kann die Verdrehsicherung in Form einer oder mehrerer Passfedern ausgeführt sein, wobei geeignete Passfedernuten in der Schnecke und in einer oder beiden Halbschalen vorgesehen sind.

Nachfolgend soll die Erfindung anhand eines Ausführungsführungsbeispiels und unter Bezugnahme auf die Figuren 3 bis 6 näher beschrieben werden. Es zeigen:
- Figur 3a: perspektivische Darstellung einer Schnecke gemäß einer ersten Ausführungsform mit einer erfindungsgemäßen Rückströmsperre - mit Schnittdarstellung im Bereich der Rückströmsperre;
- Figur 3b: vergrößerte Darstellung des im Kreis K2 befindlichen Teils der Rückströmsperre aus der Figur 3a;
- Figur 4a: perspektivische Darstellung einer erfindungsgemäßen Rückströmsperre;
- Figur 4b: Draufsicht auf die Rückströmsperre gemäß Figur 4a aus Richtung des Pfeils Z in der Figur 4a;
- Figur 5a: perspektivische Darstellung einer Plastifiziereinheit mit einer erfindungsgemäßen Rückströmsperre - mit aufgeschnittenem Zylinder und Granulattrichter;
- Figur 5b: vergrößerte Darstellung des im Kreis K3 befindlichen Teils der Plastifiziereinheit aus Figur 5a;
- Figur 6: zweite Ausführungsform einer Schnecke mit einer erfindungsgemäßen Rückströmsperre.

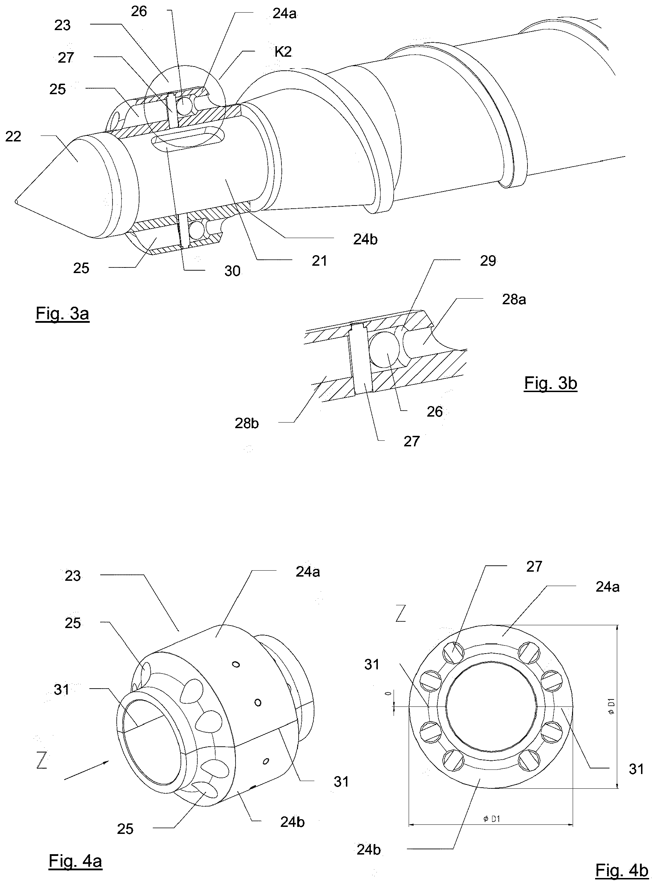

Gemäß der Figur 3a ist eine Schnecke 20 an ihrem vorderen Ende mit einem Abschnitt 21 reduzierten Schneckendurchmesser ausgebildet. Daran schließt sich stromabwärts eine Schneckenspitze 22 an. In dem Abschnitt 21 ist eine erfindungsgemäße Rückströmsperre 23 angeordnet, umfassend zwei Halbschalen 24a und 24b. In jeder der Halbschalen 24a, 24b sind Kanäle 25 für den Durchfluss von Schmelze von der Schnecke 20 in den Schneckenvorraum vor der Schneckenspitze 22 vorgesehen. Die Kanäle liegen parallel zur Längsachse der Rückströmsperre 23 bzw. zur Längsachse der Schnecke 20. In jedem der Kanäle 25 ist eine Kugel 26 und in Fließrichtung der Schmelze gesehen nachfolgend der Kugel 26 ein Stift 27 vorgesehen, wobei der Stift vorzugsweise im Wesentlichen quer zu Fließrichtung der Schmelze angeordnet ist. Die Kanäle 25 sind derart ausgebildet, dass in Fließrichtung der Schmelze gesehen jeweils ein erster Kanalabschnitt 28a mit einem Kanaldurchmesser kleiner als der Kugeldurchmesser und ein zweiter Kanalabschnitt 28b mit einem Kanaldurchmesser größer als der Kugeldurchmesser vorliegt. Kugel und Stift sind in dem zweiten Kanalabschnitt 28b angeordnet. Der Übergang 29 von dem ersten Kanalabschnitt 28a auf den zweiten Kanalabschnitt 28b ist vorzugsweise konisch ausgebildet, woraus sich ein konischer Dichtsitz für die Kugel 26 ergibt. Eine Verdrehsicherung 30 stellt sicher, dass bei Rotation der Schnecke 20 keine Relativbewegung zwischen der Schnecke und der Rückströmsperre vorkommen kann. Die Verdrehsicherung 30 kann in Form einer oder mehrerer Passfedern ausgeführt sein (hier nicht dargestellt). Die Verdrehsicherung kann aber auch in anderer geeigneter Weise formschlüssig erfolgen. De Halbschalen 24a, 24b, die Kugeln 25 und die Stifte 27 bestehen vorzugsweise aus gehärtetem, verschleißbeständigem Stahl. Die äußere Oberfläche der Halbschalen, insbesondere der Außendurchmesser der Halbschalen 24a und 24b, kann zusätzlich durch eine Verschleißschutzschicht geschützt werden. Diese kann zum Beispiel im Plasma-Pulver-Auftragsschweißen aufgebracht sein. Im Unterschied zum Stand der Technik sind die Schneckenspitze 22 und die Schnecke 20 ein Bauteil.

Wie in den Figuren 4a und 4b ersichtlich, sind die Halbschalen 24a und 24b vorzugsweise so ausgeführt, dass sich in der Trennfuge 31 zwischen den beiden Halbschalen eine Trennspaltweite von '0' ergibt. Der Außendurchmesser der montierten Halbschalen 24a und 24b ist parallel und senkrecht zur Trennfuge 31 gemessen gleich groß. Durch diese Ausführung wird ein Zurückströmen des schmelzflüssigen Kunststoffs zwischen den beiden Halbschalen 24a und 24b verhindert.

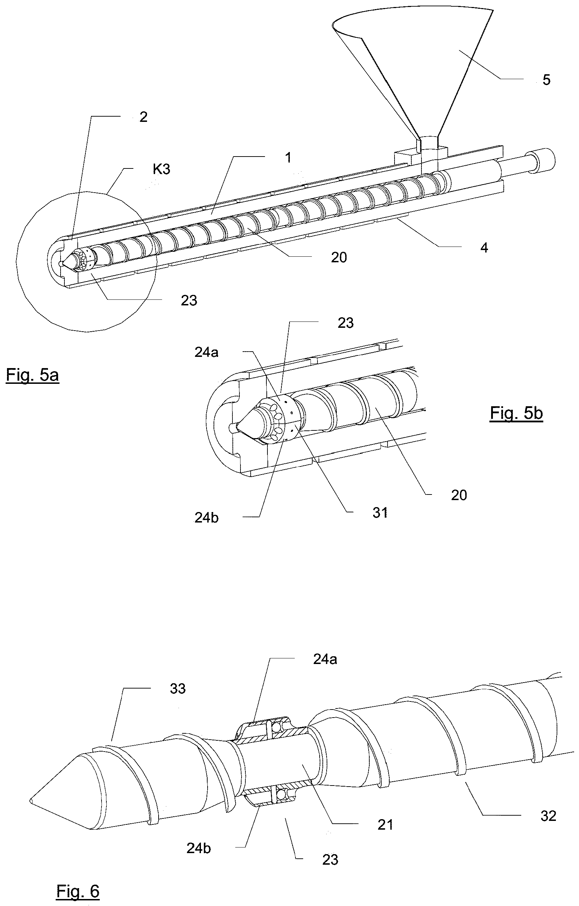

Die Figuren 5a und 5b zeigen eine Plastifiziereinheit mit einer Schnecke gemäß einer ersten Ausführungsform der Erfindung. Schneckenzylinder 1, Zylinderkopf 2, Heizbänder 4 und Granulattrichter 5 können in an sich bekannter Weise wie in der Figur 1 ausgebildet sein. Daher können vorliegend auch die gleichen Bezugszeichen verwendet werden. Im Unterschied zum Stand der Technik ist die Schnecke 20 mit einer erfindungsgemäßen Rückströmsperre 23 ausgestattet. Das vordere Ende der Schnecke 20 ist gemäß den Darstellungen der Figuren 3a und 3b ausgebildet, d.h. die Schnecke 20 verfügt über einen Abschnitt 21 mit einem reduzierten Durchmesser. In diesem Bereich können die beiden Halbschalen 24a und 24b auf der Schnecke 20 angeordnet werden.

Die Figur 6 zeigt eine Schnecke 20 gemäß einer zweiten Ausführungsform der Erfindung. Die Rückströmsperre 23 muss nicht zwingend am vorderen Ende der Schnecke sitzen, sondern kann auch weiter stromaufwärts angeordnet sein. Bei dieser Variante befinden ein oder mehrere Schneckenstege 32 stromaufwärts von der Rückströmsperre 23 sowie ein oder mehrere Schneckenstege 33 stromabwärts von der Rückströmsperre 23, so dass in Fließrichtung der Schmelze gesehen nach der Rückströmsperre 23 eine weitere Förderung und Homogenisierung der Kunststoffschmelze stattfindet. Die genaue Anzahl und der jeweilige Verlauf der Schneckenstege 32, 33 zu beiden Seiten der Rückströmsperre 23 hängt vom Anwendungsfall ab. In der Ausführung gemäß der Figur 6 sind ein Schneckensteg 32 stromaufwärts der Rückströmsperre 23 und ein Schneckensteg 33 stromabwärts von der Rückströmsperre 23 vorgesehen. Die Rückströmsperre 23 entspricht der Ausführungsform, wie sie im Zusammenhang mit den Figuren 3a, 3b, 4a und 4b näher beschrieben worden ist. Im Unterschied zu den Figuren 3a, 5a und 5b ist der Bereich 21 mit reduziertem Schneckendurchmesser und damit die Position der Rückströmsperre 23 von dem vorderen Ende der Schnecke 20 weiter beabstandet. Der genaue Abstand und damit die Position der Rückströmsperre 23 auf der Schnecke 20 richten sich nach dem jeweiligen Anwendungsfall. In Längsrichtung der Schnecke 20 gesehen kann die Rückströmsperre 23 mehr oder weniger weit vom vorderen Ende der Schnecke 20 entfernt angeordnet sein.

### Bezugszeichenliste

- 1: Schneckenzylinder
- 2: Zylinderkopf
- 3: Schnecke
- 4: Heizbänder
- 5: Granulattrichter
- 6: Rückströmsperre gemäß dem Stand der Technik
- 7: Schneckenkopf
- 8: Druckring
- 9: Sperrring
- 10: Gewinde
- 11: Flügel
- 20: Schnecke
- 21: Abschnitt mit reduziertem Durchmesser
- 22: Schneckenspitze
- 23: Erfindungsgemäße Rückströmsperre
- 24a: Erste Halbschale
- 24b: Zweite Halbschale
- 25: Kanal
- 26: Kugel
- 27: Zylinderstift
- 28a: Kanalabschnitt mit Durchmesser kleiner als Kugeldurchmesser
- 28b: Kanalabschnitt mit Durchmesser größer als Kugeldurchmesser
- 29: Konischer Kugel-Dichtsitz
- 30: Verdehsicherung
- 31: Trennfuge
- 32: Schneckensteg stromaufwärts
- 33: Schneckensteg stromabwärts

## Patentansprüche

1. Rückströmsperre (23) für eine Schnecke (20) einer Plastifiziereinheit einer Spritzgießmaschine, umfassend zwei Halbschalen (24a, 24b), welche in einem Abschnitt (21) der Schnecke (20) mit reduziertem Schneckendurchmesser angeordnet werden können, wobei in jeder der Halbschalen (24a, 24b) ein oder mehrere Kanäle (25) für den Durchfluss von Schmelze von der Schnecke (20) in den Schneckenvorraum vorgesehen sind, wobei die Kanäle (25) im Wesentlichen parallel zur Längsachse der Rückströmsperre (23) bzw. zur Längsachse der Schnecke (20) liegen, wobei in jedem der Kanäle (25) eine Kugel (26) und in Fließrichtung der Schmelze gesehen nachfolgend der Kugel ein Stift (27) vorgesehen sind, wobei der Stift (27) im Wesentlichen quer zu Fließrichtung der Schmelze angeordnet ist, wobei die Kanäle (25) in Fließrichtung der Schmelze gesehen jeweils einen ersten Kanalabschnitt (28a) mit einem Kanaldurchmesser kleiner als der Kugeldurchmesser und einen zweiten Kanalabschnitt (28b) mit einem Kanaldurchmesser größer als der Kugeldurchmesser aufweisen, und wobei Kugel (25) und Stift (27) in dem zweiten Kanalabschnitt (28b) angeordnet sind.

2. Rückströmsperre nach Anspruch 1
**dadurch gekennzeichnet, dass**
ein konisch ausgebildeter Übergang (29) von dem ersten Kanalabschnitt (28a) auf den zweiten Kanalabschnitt (28b) vorgesehen ist.

3. Rückströmsperre nach Anspruch 1 oder 2,
**dadurch gekennzeichnet, dass**
der Stift (27) einen zylindrischen Querschnitt aufweist bzw. als Zylinderstift (27) ausgebildet ist.

4. Rückströmsperre nach einem der vorstehenden Ansprüche,
**dadurch gekennzeichnet, dass**
die Halbschalen (24a, 24b) derart ausgebildet sind, dass der Außendurchmesser der zusammengefügten Halbschalen (24a, 24b) parallel und senkrecht zur Trennfuge (31) gemessen gleich groß ist, derart, dass sich in zusammengefügtem Zustand eine Trennspaltweite von Null ergibt.

5. Schnecke einer Plastifiziereinheit einer Spritzgießmaschine mit einer Rückströmsperre (23) nach einem der Ansprüche 1 bis 4, wobei die Schnecke (20) einen Abschnitt (21) aufweist, in welchem kein Schneckensteg (32, 33) vorhanden ist und in welchem der Außendurchmesser der Schnecke (20) dem Innendurchmesser der Rückströmsperre (23) entspricht, und wobei die beiden Halbschalen (24a, 24b) der Rückströmsperre in besagtem Abschnitt (21) auf der Schnecke (20) angeordnet sind.

6. Schnecke nach Anspruch 5,
**dadurch gekennzeichnet, dass**
die Rückströmsperre (23) in Fließrichtung der Schmelze gesehen am vorderen Ende der Schnecke (20) angeordnet ist.

7. Schnecke nach Anspruch 5,
**dadurch gekennzeichnet, dass**
die Rückströmsperre (23) vom vorderen Ende der Schnecke (20) beabstandet angeordnet ist, derart dass in Fließrichtung der Schmelze gesehen sowohl vor als auch hinter der Rückströmsperre (23) ein Schneckenabschnitt mit einem Schneckensteg (32, 33) vorliegt.

8. Schnecke nach einem der Ansprüche 5 bis 7,
**dadurch gekennzeichnet, dass**
eine oder beide Halbschalen (24a, 24b) mittels einer Verdrehsicherung (30) auf der Schnecke (20) angeordnet sind.

9. Schnecke nach Anspruch 8,
**dadurch gekennzeichnet, dass**
die Verdrehsicherung (30) in Form einer oder mehrerer Passfedern ausgeführt ist.

10. Plastifiziereinheit einer Spritzgießmaschine mit einer dreh- und linearantreibbaren Schnecke gemäß einem der Ansprüche 5 bis 9.

## Claims

1. A nonreturn valve (23) for a screw (20) of a plasticising unit of an injection-moulding machine, comprising two half-shells (24a, 24b), which can be arranged in a portion (21) of the screw (20) with reduced screw diameter, wherein in each of the half-shells (24a, 24b) one or more channels (25) are provided for melt to flow through from the screw (20) into the space in front of the screw, wherein the channels (25) lie substantially parallel to the longitudinal axis of the nonreturn valve (23) or respectively to the longitudinal axis of the screw (20), wherein in each of the channels (25) there are provided a ball (26) and, following the ball as seen in the direction of flow of the melt, a pin (27), wherein the pin (27) is arranged substantially transversely to the direction of flow of the melt, wherein the channels (25), as seen in the direction of flow of the melt have respectively a first channel portion (28a) with a channel diameter smaller than the ball diameter, and a second channel portion (28b) with a channel diameter greater than the ball diameter, and wherein ball (25) and pin (27) are arranged in the second channel portion (28b).

2. The nonreturn valve according to Claim 1,
**characterized in that**
a conically configured transition (29) is provided from the first channel portion (28a) to the second channel portion (28b).

3. The nonreturn valve according to Claim 1 or 2,
**characterized in that**
the pin (27) has a cylindrical cross-section or respectively is configured as a cylinder pin (27).

4. The nonreturn valve according to one of the preceding claims,
**characterized in that**
the half-shells (24a, 24b) are configured in such a way that the external diameter of the joined-together half-shells (24a, 24b), measured parallel and perpendicularly to the separation joint (31), is of equal size, in such a way that in the joined-together state, a separation gap width of zero results.

5. A screw of a plasticising unit of an injection-moulding machine with a nonreturn valve (23) according to one of Claims 1 to 4, wherein the screw (20) has a portion (21) in which no screw flight (32, 33) is present and in which the external diameter of the screw (20) corresponds to the internal diameter of the nonreturn valve (23), and wherein the two half-shells (24a, 24b) of the nonreturn valve are arranged in said portion (21) on the screw (20).

6. The screw according to Claim 5,
**characterized in that**
the nonreturn valve (23), as seen in the flow direction of the melt, is arranged at the front end of the screw (20) .

7. The screw according to Claim 5,
**characterized in that**
the nonreturn valve (23) is arranged spaced apart from the front end of the screw (20) in such a way that, as seen in the flow direction of the melt, both in front of and also behind the nonreturn valve (23) a screw portion is present with a screw flight (32, 33).

8. The screw according to one of Claims 5 to 7,
**characterized in that**
one or both half-shells (24a, 24b) are arranged by means of an anti-rotation means (30) on the screw (20).

9. The screw according to Claim 8,
**characterized in that**
the anti-rotation means (30) is embodied in the form of one or more keys.

10. A plasticising unit of an injection-moulding machine with a screw, able to be driven rotatably and linearly, according to one of Claims 5 to 9.

## Revendications

1. Clapet antiretour (23), destiné à une vis sans fin (20) d'une unité de plastification d'une machine de moulage par injection, comprenant deux demi-coques (24a, 24b), qui peuvent se placer dans un tronçon (21) de la vis sans fin (20) à diamètre de vis réduit, dans chacune des demi-coques (24a, 24b) étant prévues une ou plusieurs canalisations (25) pour le passage de masse fondue de la vis sans fin (20) dans l'espace antérieur à la vis, les canalisations (25) se situant sensiblement à la parallèle de l'axe longitudinal du clapet antiretour (23) ou de l'axe longitudinal de la vis sans fin (20), dans chacune des canalisations (25) étant prévue une sphère (26) et considérée dans la direction d'écoulement de la masse fondue, à la suite de la sphère étant prévue une tige (27), la tige (27) étant placée sensiblement à la transversale de la direction d'écoulement de la masse fondue, considérées dans la direction d'écoulement de la masse fondue, les canalisations (25) comportant chacune un premier tronçon (28a) de canalisation, doté d'un diamètre de canalisation inférieur au diamètre de la sphère et un deuxième tronçon (28b) de canalisation, doté d'un diamètre de canalisation supérieur au diamètre de la sphère, et la sphère (25) et la tige (27) étant placées dans le deuxième tronçon (28b) de canalisation.

2. Clapet antiretour selon la revendication 1 **caractérisé en ce qu'**un passage (29) conçu de forme conique est prévu du premier tronçon (28a) de canalisation, vers le deuxième tronçon (28b) de canalisation.

3. Clapet antiretour selon la revendication 1 ou 2, **caractérisé en ce que** la tige (27) comporte une section transversale cylindrique ou est conçue sous la forme d'une tige cylindrique (27).

4. Clapet antiretour selon l'une quelconque des revendications précédentes, **caractérisé en ce que** les demi-coques (24a, 24b) sont conçues de telle sorte que, mesuré à la parallèle et à la perpendiculaire de la jointure (31), le diamètre extérieur des demi-coques (24a, 24b) assemblées soit identique, de telle sorte qu'en position assemblée, il résulte un intervalle de séparation de largeur égale à zéro.

5. Vis sans fin d'une unité de plastification d'une machine de moulage par injection, pourvue d'un clapet antiretour (23) selon l'une quelconque des revendications 1 à 4, la vis sans fin (20) comportant un tronçon (21) dans lequel il n'existe aucun filet de vis (32, 33) et dans lequel le diamètre extérieur de la vis sans fin (20) correspond au diamètre intérieur du clapet antiretour (23) et les deux demi-coques (24a, 24b) du clapet antiretour étant placées dans ledit tronçon (21) sur la vis sans fin (20).

6. Vis sans fin selon la revendication 5, **caractérisé en ce que**, considéré dans la direction d'écoulement de la masse fondue, le clapet antiretour (23) est placé sur l'extrémité antérieure de la vis sans fin (20).

7. Vis sans fin selon la revendication 5, **caractérisé en ce que** le clapet antiretour (23) est placé en étant écarté de la vis sans fin (20) de telle sorte que, considérés dans la direction d'écoulement de la masse fondue, aussi bien à l'avant qu'à l'arrière du clapet antiretour (23) soit présent un tronçon de vis avec un filet de vis (32, 33).

8. Vis sans fin selon l'une quelconque des revendications 5 à 7, **caractérisée en ce qu'**une ou les deux demi-coques (24a, 24b) sont placées au moyen d'un blocage anti-rotation (30) sur la vis sans fin (20).

9. Vis sans fin selon la revendication 8, **caractérisée en ce que** le blocage anti-rotation (30) est réalisé sous la forme d'une ou de plusieurs clavettes.

10. Unité de plastification d'une machine de moulage par injection, pourvue d'une vis sans fin susceptible d'être entraînée en rotation et en déplacement linéaire, selon l'une quelconque des revendications 5 à 9.
